Europäisches Patentamt

European Patent Office

Office européen des brevets

(11) Veröffentlichungsnummer: **0 366 906**

**A1**

## EUROPÄISCHE PATENTANMELDUNG

(21) Anmeldenummer: **89116486.5**

(22) Anmeldetag: **07.09.89**

(51) Int. Cl.5: **G01B 5/03**

(30) Priorität: **08.09.88 DE 3830526**

(43) Veröffentlichungstag der Anmeldung:
**09.05.90 Patentblatt 90/19**

(84) Benannte Vertragsstaaten:
**CH DE FR GB IT LI**

(71) Anmelder: **Mauser-Werke Oberndorf GmbH**
**Teckstrasse 11**
**D-7238 Oberndorf(DE)**

(72) Erfinder: **Broghammer, Heinz**
**Auf der Eck 4**
**D-7214 Zimmern(DE)**
Erfinder: **Band, Gerhard**
**Dammstrasse 18**
**D-7238 Oberndorf(DE)**

(74) Vertreter: **Hofmann, Gerhard, Dipl.-Ing.**
**Patentassessor**
**Stephanstrasse 49**
**D-8500 Nürnberg(DE)**

(54) **Spindelantrieb bei einer Koordinatenmessmaschine.**

(57) Bei einem Spindelantrieb einer Koordinatenmeßmaschine sitzt auf einer Gewindespindel(1) in einem
Aufnahmekörper(4) eine Spindelmutter(3). Um einen
Radialschlag und Taumelbewegungen der
Gewindespindel() aufzufangen, ist zwischen dem
Aufnahmekörper(4) und dem Halteteil(2) des anzutreibenden Teils ein Zwischenring(5) angeordnet.
Der Aufnahmekörper(4) ist mit dem Zwischenring(5)
über eine erste Ausgleichseinrichtung(12 bis 15) verbunden, die ein Ausgleichsspiel(18) in einer zur
Spindelachse(S) senkrechten Richtung(B) erlaubt.
Der Zwischenring(5) ist mit dem Halteteil(2) über
eine zweite Ausgleichseinrichtung(6 bis 9) verbunden, die ein Ausgleichsspiel(19) in einer zur
Spindelachse(S) und zur ersten Richtung(B) senkrechten zweiten Richtung(A) erlaubt.

Fig.1

## Spindelantrieb bei einer Koordinatenmeßmaschine

Die Erfindung betrifft einen Spindelantrieb bei einer Koordinatenmeßmaschine, bei dem auf einer angetriebenen Gewindespindel eine in einem Aufnahmekörper befestigte Spindelmutter sitzt und bei dem zwischen dem Aufnahmekörper und einem mit einem anzutreibenden Teil fest verbundenen Halteteil über Wälzkörper ein zur Spindelachse radiales Ausgleichsspiel und ein Ausgleich von Taumelbewegungen der Spindel besteht.

Ein derartiger Spindelantrieb ist in der DE-OS 35 14 961 beschrieben. Um zu verhindern, daß sich ein Radialschlag der Gewindespindel auf das anzutreibende Teil, hier die Pinole, überträgt, sind Wälzkörper zwischen ebenen, sich senkrecht zur Spindelachse erstreckenden Lagerflächen angeordnet. Eine Taumelbewegung der Spindelachse überträgt sich nicht auf das anzutreibende Teil, da dieses auf einer Kugelfläche um die Spindelmutter bewegbar ist. Diese Kugelfläche ist in der Herstellung aufwendig. Sie ist vergleichsweise groß. Dementsprechend groß sind an ihr vorgesehene Kugellager. Um die Spindelmutter bei einer Drehung der Spindel drehfest mit der Pinole zu verbinden, sind nach der DE-OS 35 14 961 Kugelanschlußbolzen vorgesehen. Diese greifen in in ihrem Durchmesser größere Buchsen. Dadurch ist die Drehmomentübertragung bzw. die drehstarre Verbindung zwischen der Pinole und der Spindelmutter nicht spielfrei.

In dem DE-GM 81 32 380 ist ein weiterer Spindelantrieb für eine Koordinatenmeßmaschine beschrieben. Bei diesem ist eine Lageveränderung des Meßschlittens nach erfolgter Vorschubbewegung vermieden. Der Aufnahmekörper weist eine zur Spindelachse rechtwinklige Sackbohrung mit eingepaßter Buchse auf. In diese greift ein Mitnehmerzapfen ein, der mit einem Halteteil verbunden ist. In der Sackbohrung ist ein Kugelkäfig mit auf einer Kreisringlinie angeordneten Kugeln zur Führung des Mitnehmerzapfens vorgesehen. Ein radialer Schlag der Spindel oder Taumelbewegungen führen zu auf den Meßschlitten wirkenden Querkräften. Diese können durch eine entsprechend aufwendige Spindel vermieden werden.

Aufgabe der Erfindung ist es, einen Spindelantrieb der eingangs genannten Art vorzuschlagen, bei dem zusätzlich die Spindelmutter mit dem Halteteil gegen ein Rotation um die Spindelachse spielfrei verbunden ist.

Erfindungsgemäß ist obige Aufgabe bei einem Spindelantrieb der eingangs genannten Art dadurch gelöst, daß zwischen dem Aufnahmekörper und dem Halteteil ein Zwischenring angeordnet ist, daß der Aufnahmekörper mit dem Zwischenring über eine erste Ausgleichseinrichtung verbunden ist, die ein Ausgleichsspiel in einer zur Spindelachse ersten senkrechten Richtung erlaubt, daß der Zwischenring mit dem Halteteil über eine weitere Ausgleichseinrichtung verbunden ist, die ein Ausgleichsspiel in einer zur Spindelachse und zur ersten Richtung senkrechten zweiten Richtung erlaubt, und daß beide Ausgleichseinrichtungen jeweils wenigstens einen zylindrischen Mitnehmerzapfen aufweisen, der in einem Kugelkranz in der ersten bzw. zweiten Richtung beweglich geführt und in Richtung der Spindelachse spielfrei ist, wobei die Achsen der Mitnehmerzapfen und der Kugelkränze in der ersten bzw. zweiten Richtung liegen und die Spindelachse in einem gemeinsamen Punkt schneiden.

Dadurch ist es möglich, eine einfache Gewindespindel zu verwenden, bei der mit größeren Ablauffehlern zu rechnen ist. Eine solche Gewindespindel ist beispielsweise eine gerollte Gewindespindel. Ein radialer Schlag der Gewindespindel überträgt sich nicht auf das Halteteil, da die Ausgleichseinrichtungen in allen zur Spindelachse radialen Richtungen diesen Radialschlag auffangen. Taumelbewegungen der Spindel übertragen sich nicht auf das Halteteil, da die Mitnehmerzapfen der Ausgleichseinrichtungen in den Kugelkränzen um die Achsen der Mitnehmerzapfen schwenkbar sind. In axialer Richtung der Spindelachse jedoch ist das Halteteil mit der Spindelmutter spielfrei verbunden, da die Mitnehmerzapfen in dieser Richtung spielfrei in den Kugelkränzen sitzen. Gleichzeitig ergibt sich daraus, daß die Spindelmutter mit dem Halteteil auch gegen eine Drehung um die Spindelachse drehfest verbunden ist.

Günstig ist auch, daß alle Ausgleichseinrichtungen gleich aufgebaut und in ihrem Aufbau einfach sind.

In bevorzugter Ausgestaltung der Erfindung weisen beide Ausgleichseinrichtungen je zwei, bezogen auf die Spindelachse gegenüberliegende Mitnehmerzapfen und Kugelkränze auf, deren Achsen in einer Linie liegen und die die Spindelachse in einem Punkt schneiden. Dadurch ist ein die Stabilität des Systems begünstigender, symmetrischer Aufbau erreicht.

Um ein Aufschaukeln von bei bestimmten Drehzahlen der Gewindespindel auftretenden Schwingungen zu unterdrücken, ist zwischen dem Halteteil und dem Aufnahmekörper ein Dämpfungselement wirksam.

Weitere vorteilhafte Ausgestaltungen der Erfindung ergeben sich aus den Unteransprüchen und der folgenden Beschreibung eines Ausführungsbeispiels. In der Zeichnung zeigen:

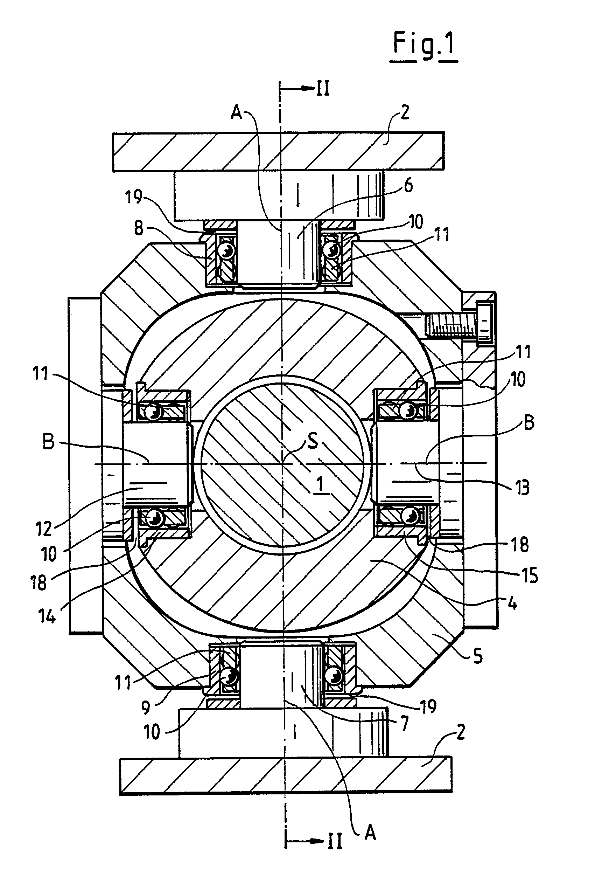

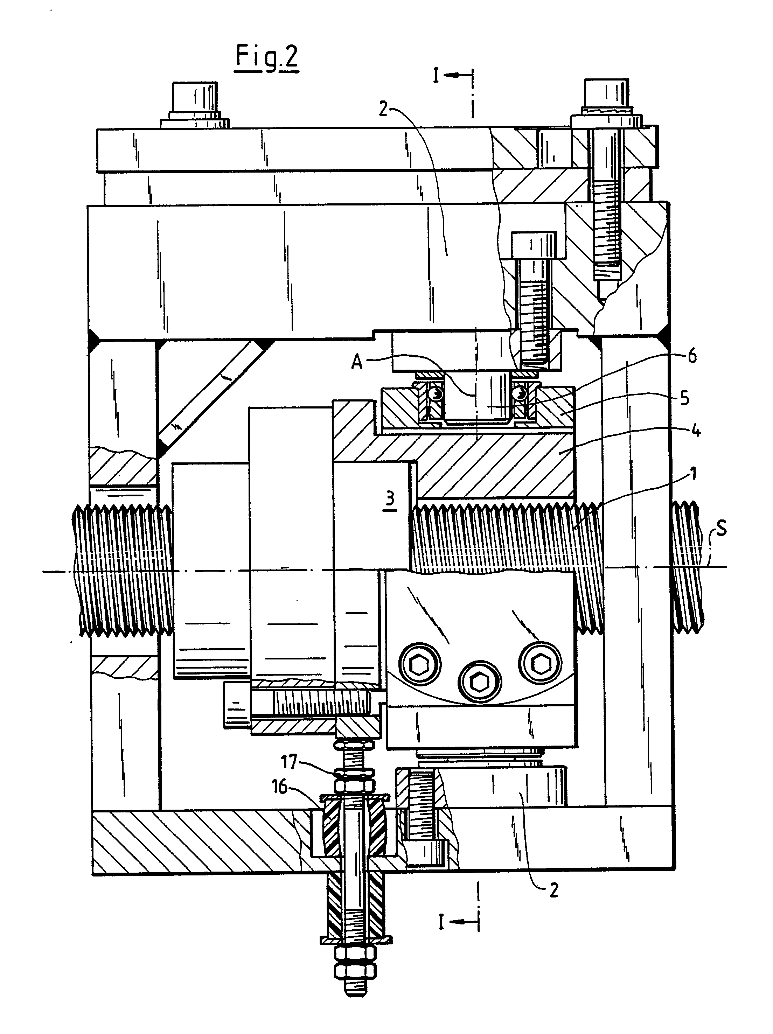

Figur 1 einen Schnitt des Spindelantriebs längs der Linie I-I nach Figur 2 und

Figur 2 einen Schnitt längs der Linie II-II nach Figur 1.

Ein Spindelantrieb weist eine Gewindespindel-(1) auf. Die Spindelachse ist mit (5) bezeichnet. Die Gewindespindel(1) ist mittels eines nicht näher dargestellten Motors antreibbar. Sie ist zum Antrieb eines nicht näher dargestellten Meßschlittens einer Koordinantenmeßmaschine vorgesehen, welcher an einem Halteteil(2) befestigt ist.

Auf der Gewindespindel(1) sitzt eine Spindelmutter(3), die in einem Aufnahmekörper(4) befestigt ist. Der Aufnahmekörper(4) umschließt die Gewindespindel(1). Zwischen dem Aufnahmekörper(4) und dem Halteteil(2) ist ein Zwischenring(5) angeordnet.

An dem Halteteil(2) sind zwei zylindrische Mitnehmerzapfen(6,7) befestigt. In Sackbohrungen des Zwischenrings(5) sind Lagerbuchsen(8,9) eingesetzt. In diesen sind Kugelkränze(10) in Käfigen(11) angeordnet. Die Kugelkränze(10) nehmen die Mitnehmerzapfen(6,7) in Richtung deren Umfangs spielfrei auf. In Richtung der Achsen(A) sind die Mitnehmerzapfen(6,7) in den Kugelkränzen(10) verschieblich. Die Achsen(A) liegen in einer Linie und senkrecht zur Spindelachse(S) und schneiden diese.

Am Zwischenring(5) sind weitere Mitnehmerzapfen(12,13) befestigt. Deren Achsen(B) liegen in einer Linie, die senkrecht zu der Achse(A) und senkrecht zur Spindelachse(S) steht und die Spindelachse(S) in dem gleichen Punkt wie die Achsen(A) schneidet.

Für die Mitnehmerzapfen(12,13) sind am Aufnahmekörper(4) Lagerbuchsen(14,15) vorgesehen. In diesen sind Kugelkränze(10) in Käfigen(11) angeordnet. Die Mitnehmerzapfen(12,13) sind durch die Kugelkränze(10) in den Lagerbuchsen-(14,15) radial zur Achse(B) spielfrei gehalten. Sie sind in Richtung der Achse(B) verschieblich und um die Achse(B) drehbar.

Am Halteteil(2) ist ein Dämpfungselement(16) angeordnet. Dieses stützt sich über eine einstellbare Schraubenverbindung(17) an dem Aufnahmekörper(4) ab.

Die Funktion der beschriebenen Einrichtung ist etwa folgende:

Bei einem Radialschlag der Gewindespindel(1), den die Spindelmutter(3) und der Aufnahmekörper-(4) mitmachen, wird dieser in Richtung der Achse-(B) nicht auf den Zwischenring(5) übertragen, da sich wegen der verschieblichen Lagerung der Mitnehmerzapfen(12,13) der Aufnahmekörper(4) gegenüber dem Zwischenring(5) im Bereich des Spielraums(18) verschieben kann. Der Radialschlag wird in Richtung(A) nicht vom Zwischenring(5) auf das Halteteil(2) übertragen, da sich die Mitnehmerzapfen(6,7) im Bereich des Spielraums-

(19) verschieben können.

Taumelbewegungen der Gewindespindel(1) werden ebenfalls nicht auf das Halteteil(2) übertragen, da sich die Mitnehmerzapfen(6,7,12,13) um die Achsen(A bzw. B) frei schwenken können.

Eine axiale Bewegung der Spindelmutter(3) wird spielfrei auf das Halteteil(2) übertragen, da die Mitnehmerzapfen(6,7,12,13) radial zu ihren Achsen-(A bzw. B) spielfrei in dem Zwischenring(5) bzw. dem Aufnahmekörper(4) sitzen.

Die Spindelmutter(3) ist mit dem Halteteil(2) bei einer Drehung um die Spindelachse(S) spielfrei verbunden, da die Mitnehmerzapfen(6,7,12,13) radial zu ihren Achsen(A bzw. B) gelagert sind.

## Ansprüche

1. Spindelantrieb bei einer Koordinatenmeßmaschine, bei dem auf einer angetriebenen Gewindespindel eine in einem Aufnahmekörper befestigte Spindelmutter sitzt und bei dem zwischen dem Aufnahmekörper und einem mit einem anzutreibenden Teil fest verbundenen Halteteil über Wälzkörper ein zur Spindelachse radiales Ausgleichsspiel und ein Ausgleich von Taumelbewegungen der Spindel besteht,
dadurch gekennzeichnet,
daß zwischen dem Aufnahmekörper(4) und dem Halteteil(2) ein Zwischenring(5) angeordnet ist, daß der Aufnahmekörper(4) mit dem Zwischenring(5) über eine erste Ausgleicheinrichtung(12 bis 15) verbunden ist, die ein Ausgleichsspiel(18) in einer zur Spindelachse(S) ersten senkrechten Richtung-(B) erlaubt, daß der Zwischenring(5) mit dem Halteteil(2) über eine zweite Ausgleichseinrichtungc( bis 9) verbunden ist, die ein Ausgleichsspiel-(19) in einer zur Spindelachse(S) und zur ersten senkrechten Richtung(B) senkrechten zweiten Richtung(A) erlaubt, und daß beide Ausgleichseinrichtungen(6 bis 9; 12 bis 15) jeweils wenigstens einen zylindrischen Mitnehmerzapfen-(6,7;12,13) aufweisen, der in einem Kugelkranz(10) in der ersten bzw. zweiten Richtung(A,B) beweglich geführt und in Richtung der Spindelachse(S) spielfrei ist, wobei die Achsen(A,B) der Mitnehmerzapfen(6,7,12,13) und der Kugelkränze-(10) in der ersten bzw. zweiten Richtung (A,B) liegen und die Spindelachse(S) in einem gemeinsamen Punkt schneiden.

2. Spindelantrieb nach Anspruch 1,
dadurch gekennzeichnet,
daß beide Ausgleichseinrichtungen je zwei bezogen auf die Spindelachse(S) gegenüberliegende Mitnehmerzapfen(6,7 bzw. 12,13) und Kugelkränze-(10) aufweisen, deren Achsen(A,B) in einer Linie liegen und die Spindelachse(S) schneiden.

3. Spindelantrieb nach einem der vorhergehenden Ansprüche,

dadurch gekennzeichnet,

daß zur Aufnahme des Kugelkranzes(10) in den Aufnahmekörper(4) bzw. den Zwischenring(5) eine Lagerbuchse(8,9,14,15) eingesetzt ist.

4. Spindelantrieb nach einem der vorhergehenden Ansprüche,

dadurch gekennzeichnet,

daß der Mitnehmerzapfen(6,7,12,13) in dem Kugelkranz(10) um seine Achse(A bzw. B) drehbar und radial zu dieser Achse(A bzw. B) spielfrei geführt ist.

5. Spindelantrieb nach einem der vorhergehenden Ansprüche,

dadurch gekennzeichnet,

daß zwischen dem Halteteil(2) und dem Aufnahmekörper(4) ein Dämpfungselement(16) wirksam ist.

Fig.1

Fig.2

| | EINSCHLÄGIGE DOKUMENTE | | EP 89116486.5 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl ✗) 5 |
|---|---|---|---|
| D,A | DE - A1 - 3 514 961 (MAUSER-WERKE) * Gesamt * -- | 1 | G 01 B 5/03 |
| A | DE - A1 - 3 121 363 (MAUSER-WERKE) * Gesamt * -- | 1 | |
| A | GB - A - 2 151 788 (MITUTOYO) * Gesamt * ---- | 1 | |

RECHERCHIERTE SACHGEBIETE (Int. Cl.4)

B 23 Q 15/00
B 23 Q 17/00
G 01 B 5/00
G 01 B 7/00
G 01 B 21/00

Der vorliegende Recherchenbericht wurde für alle Patentansprüche erstellt

| Recherchenort | Abschlußdatum der Recherche | Prüfer |
|---|---|---|
| WIEN | 19-02-1990 | TOMASELLI |